# EUROPÄISCHE PATENTSCHRIFT

(11) **EP 0 818 647 B1**
(45) Veröffentlichungstag und Bekanntmachung des Hinweises auf die Patenterteilung: **03.03.2004**
(21) Anmeldenummer: 97111585.2
(22) Anmeldetag: 09.07.1997
(51) Int. Cl.: F16K 31/60

(54) **Mischventil mit einem Handhebel**
Mixing valve with a handle
Mitigeur avec un levier

(30) Priorität: 13.07.1996 DE 19628397
(43) Veröffentlichungstag der Anmeldung: 14.01.1998
(73) Patentinhaber: Grohe Water Technology AG & Co. KG, 58675 Hemer (DE)
(72) Erfinder: Heimann, Bruno, 58640 Iserlohn (DE); Bischoff, Bernd, 58675 Hemer (DE); Keiter, Kerstin, 58708 Menden (DE)

(56) Entgegenhaltungen:
- EP-A- 0 140 275
- EP-A- 0 199 960
- EP-A- 0 733 839
- DE-A- 3 124 241
- DE-A- 3 606 097

## Beschreibung

Die Erfindung betrifft ein Mischventil, bestehend aus einem Armaturenkörper und einer die Ventilglieder aufnehmenden Ventilkartusche, mit einem Handhebel zur Betätigung eines in zwei Freiheitsgraden bewegbaren Ventilglieds zur Bestimmung des Mischungsverhältnisses und der Gesamtdurchflußmenge, wobei der mit dem Ventilglied verbundene, um zwei senkrecht zueinander in der Ventilkartusche angeordneten Drehachsen verschwenkbare Handhebel seitlich aus dem Mantelbereich eines um die erste Drehachse drehbar gehalterten, als Hülse ausgebildeten Hebelkopfgehäuses herausgeführt ist.

Ein derartiges Mischventil ist beispielsweise aus der europäischen Patentschrift Veröffentlichungsnummer 0 140 275 B1 bekannt. Das Hebelkopfgehäuse besteht hierbei aus einer Mantelhülse und einer Abdeckkappe. Zur Halterung und Führung des Hebelkopfgehäuses ist eine in eine Aufnahmebohrung am Armaturenkörper einschraubbare Buchse erforderlich.

In der älteren nicht vorveröffentlichten Patentanmeldung gemäß EP-A-0 733 839 ist außerdem ein Mischventil offenbart, bei dem das als Hülse ausgebildete Hebelkopfgehäuse mit am Armaturenkörper vorgesehenen Rastmittel in der Einbaulage gehalten ist.

Der Erfindung liegt die Aufgabe zugrunde, das eingangs angegebene Mischventil insbesondere bezüglich des Hebelkopfgehäuses zu verbessern.

Diese Aufgabe wird erfindungsgemäß mit einem Mischventil mit den Merkmalen des Anspruchs 1 gelöst.
Weitere Ausgestaltungen der Erfindung sind in den Ansprüchen 2 bis 15 angegeben.

Mit diesen Maßnahmen ist erreichbar, daß das Hebelkopfgehäuse als einstückige, kappenartige Hülse ausgebildet werden kann. Hierbei kann die Hülse kostengünstig aus gefärbtem Kunststoff hergestellt werden, wobei auch günstig Dekorbeschichtungen auf die Außenfläche aufbringbar sind.

Ein Ausführungsbeispiel der Erfindung ist in der Zeichnung dargestellt und wird im folgenden näher beschrieben. Es zeigt
- Fig. 1: ein Mischventil in Form einer Spültischwasserauslaufarmatur mit herausziehbarem Handbrausenauslauf;
- Fig. 2: einen Teil des in Fig. 1 gezeigtenMischventils in vergrößerter Darstellung im Längsschnitt;

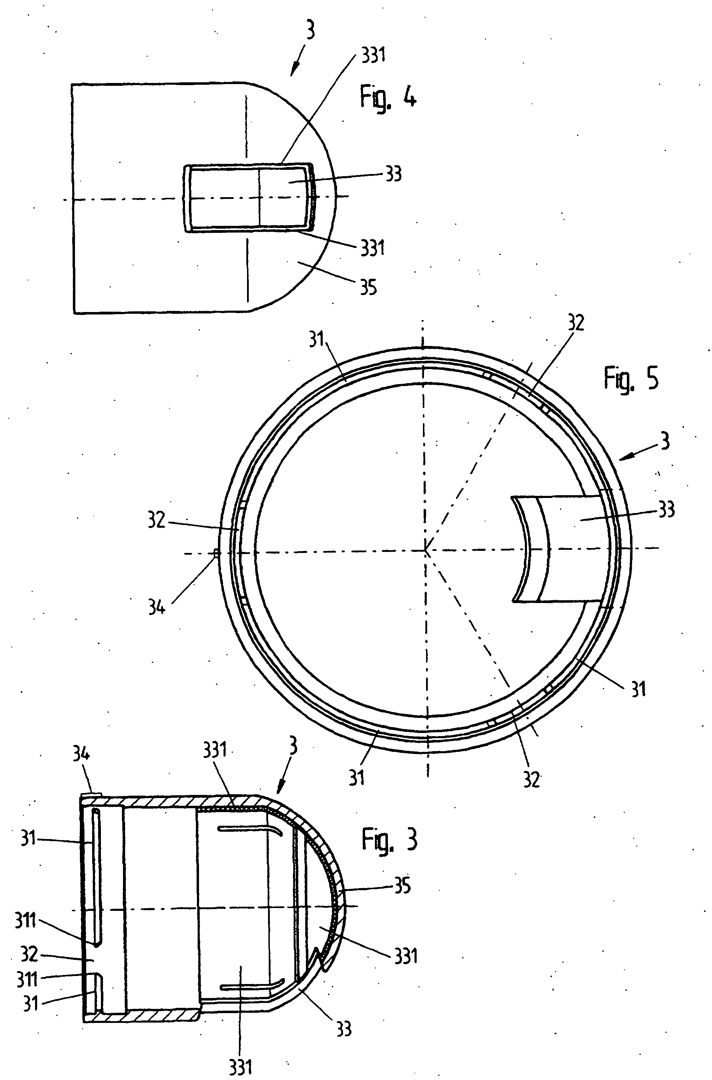

- Fig. 3: die in Fig. 2 gezeigte Hülse des Hebelkopfgehäuses im Längsschnitt;
- Fig. 4: die in Fig. 3 gezeigte Hülse um 90° gedreht in Seitenansicht;
- Fig. 5: die in Fig. 4 gezeigte Hülse in Draufsicht in vergrößerter Darstellung;
- Fig. 6: das in Fig. 2 gezeigte Ringfederelement in Seitenansicht;
- Fig. 7: das in Fig. 6 gezeigte Ringfederelement in Ansicht von oben;
- Fig. 8: das in Fig. 6 gezeigte Ringelement in Ansicht von unten.

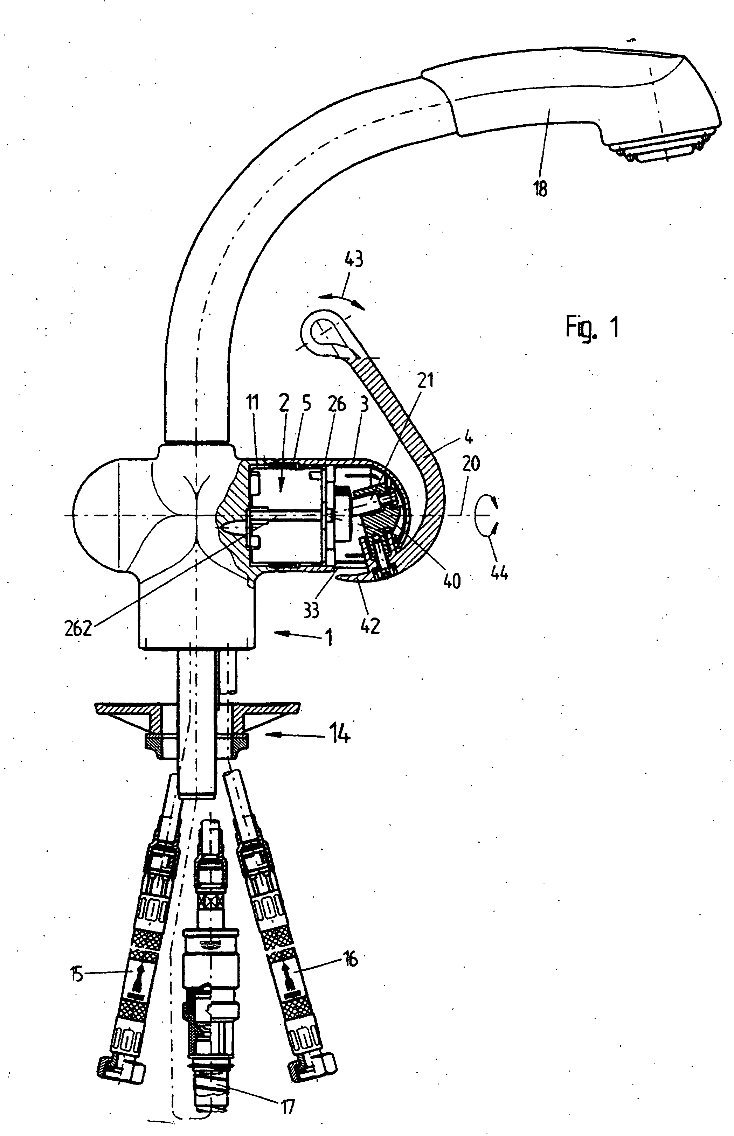

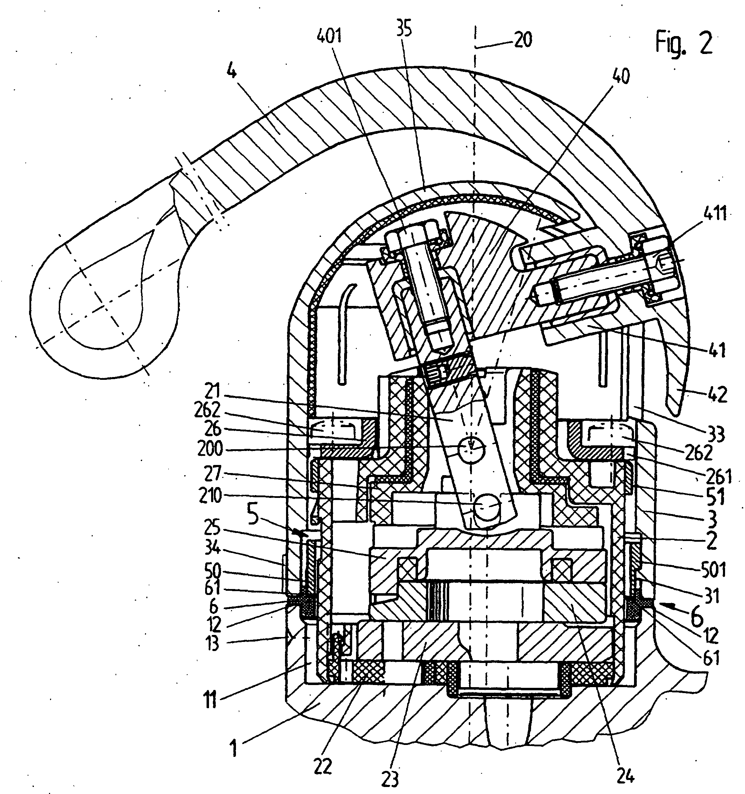

Die in Figur 1 gezeigte Auslaufarmatur ist insbesondere für den Einsatz an Spültischen gedacht und besteht aus einem Armaturenkörper 1, einer Ventilkartusche 2, einer Hülse 3 als Hebelkopfgehäuse und einem Handhebel 4.
Der Armaturenkörper 1 ist dabei so ausgebildet, daß er an einem Spültisch (in der Zeichnung nicht dargestellt) in einer Öffnung mit einer Befestigungseinrichtung 14 befestigbar ist. Durch die Öffnung in dem Waschtisch werden außerdem die Zuflußleitungen 15,16 für Kalt- und Warmwasser sowie die Mischwasserauslaßleitung 17, die das in der Ventilkartusche 2 erzeugte Mischwasser einem als herausziehbare Handbrause 18 ausgebildeten Auslauf zuführt, durchgeleitet.
In der Ventilkartusche 2 ist ein Bodenteil 22 angeordnet, in dem Zuflußöffnungen für Kalt- und Warmwasser sowie eine Abflußöffnung für Mischwasser ausgebildet sind. An dem Bodenteil 22 ist eine ortsfest gehaltene Ventilsitzscheibe 23 mit entsprechenden Durchtrittsöffnungen angelagert. An der gegenüberliegenden Stirnseite der Ventilsitzscheibe 23 ist eine Steuerscheibe 24 mit einer Abdeckhaube 25 in zwei Freiheitsgraden verschiebbar angelagert. In der Steuerscheibe 24 ist ein Durchbruch ausgebildet, der an der einen Seite von der Abdeckhaube 25 verschlossen ist, so daß die drei Durchtrittsöffnungen in der Ventilsitzscheibe 23 wahlweise über den Durchbruch miteinander verbunden werden können.
Zur Bewegung der Steuerscheibe 24 ist in dem Gehäuse der Ventilkartusche 2 ein Drehring 27 angeordnet, an dem stirnseitig die Abdeckhaube 25 abgestützt ist. In dem Drehring 27 ist außerdem ein Stellhebel 21 mit einer senkrecht zur Mittelachse 20 angeordneten Schwenkoder Drehachse 200 vorgesehen. Der Stellhebel 21 greift mit einem am inneren Hebelarm ausgebildeten Querstift 210 in eine gabelförmige Aufnahme der Abdeckhaube 25 ein. Am äußeren Hebelarm ist ein Winkelstück 40 mit einer Befestigungsschraube 401 in der Stecklage gesichert befestigt. Um 90° gedreht zur ersten Befestigung ist der Handhebel 4 mit einem Ansatz 41, ebenfalls mit einer Befestigungsschraube 411 in der Stecklage gesichert, befestigt.
Wird nun mit dem Handhebel 4 der Stellhebel 21 um seine Drehachse 200 verschwenkt, so wird die Steuerscheibe 24 zusammen mit der Abdeckhaube 25 radial zur Ventilsitzscheibe 23 verschoben, wodurch die Gesamtwasserdurchflußmenge einstellbar ist. Wird dagegen der Stellhebel 21 mit dem Handhebel 4 um die Mittelachse 20 gedreht, so wird entsprechend die Steuerscheibe 24 mit der Abdeckhaube 25 zur Ventilsitzscheibe 23 gedreht, wodurch das Mischungsverhältnis des zufließenden Kaltund Warmwassers bzw. die Mischwassertemperatur des abgegebenen Wassers einstellbar ist.
Die Ventilkartusche 2 weist ein etwa zylindrisches Gehäuse auf, welches mit Hilfe eines Druckrings 26 und zwei diametral gegenüberliegend angeordneten Spannschrauben 262 (in der Zeichnung in Figur 2 um 90° gedreht eingezeichnet) gegen den Grund einer Aufnahmebohrung 11 des Armaturenkörpers 1 verspannbar ist, wobei die in der Ventilsitzscheibe 23 ausgebildeten separaten Durchtrittsöffnungen über im Bodenteil 22 gestützten Schlauchdichtungen mit den entsprechenden Kanälen im Armaturenkörper 1 verbunden sind.

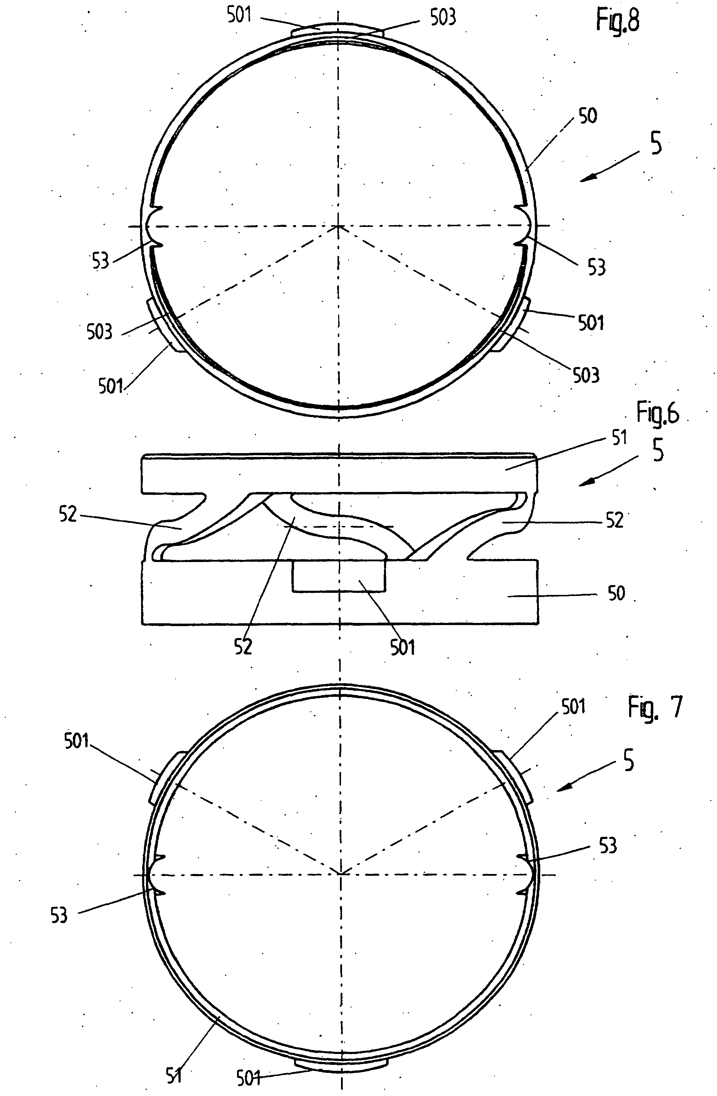

Zur Verkleidung der aus der Aufnahmebohrung 11 vorstehenden Ventilkartusche 2 und dem Stellhebel 21 mit dem Winkelstück 40 ist auf dem Mantelbereich der Ventilkartusche 2 eine Hülse 3 drehbar aber axial festliegend vorgesehen. Zu diesem Zweck ist ein Ringelement 5, wie es insbesondere in Figur 6 bis 8 in der Zeichnung dargestellt ist, angeordnet. Es besteht aus einem Kragen 50 und einer Anschlagbuchse 51, die an der Stirnseite jeweils über drei mantelförmige Federn 52 miteinander verbunden sind. Zur drehfesten Halterung in der Einbaulage sind an der Innenwandung von Kragen 50 und Anschlagbuchse 51 zwei gegenüberliegende Drehsicherungsvorsprünge 53 ausgebildet, die in der Stecklage die beiden Spannschrauben 262 zum Teil umfassen. Am Kragen 50 sind an der Außenmantelfläche drei etwa symmetrisch ausgebildete Knaggen 501 angeformt. Hierbei weist die Innenwandung des Kragens 50 im Bereich der Knaggen 501 eine Auskehlung 503 auf, so daß eine federnde Halterung der Knaggen 501 gebildet wird. Hierbei ist das gesamte Ringelement 5 einstückig aus Kunststoff im Spritzgußverfahren hergestellt.
Beim Einbau der Ventilkartusche 2 wird zunächst das Ringelement 5 übergestreift und danach der Druckring 26 mit den Spannschrauben 262 verschraubt. In den Armaturenkörper 1 war vorher der Gleitring 6 eingesetzt, so daß nunmehr einerseits die Anschlagbuchse 51 sich am Druckring 26 abstützt, andererseits die Federn 52 den Kragen 50 gegen eine Anschlagkante 61 des Gleitrings 6 drücken. Von diesem Kragen 50 wird die Hülse 3 mit einer Bajonettverbindung aufgenommen. Hierzu sind symmetrisch an dem Innenmantel der Hülse 3 radial nach innen vorspringende Ringsegmente 31 ausgebildet. Zwischen den Ringsegmenten 31 befinden sich drei symmetrisch angeordnete Freiräume 32, deren Breite geringfügig größer ausgelegt ist als die Breite der von dem Kragen 50 radial nach außen vorstehenden Knaggen 501. Die Hülse 3 kann somit bajonettartig axial auf den Kragen 50 aufgeschoben und in der Stecklage gedreht werden, so daß danach eine axiale Sicherung erfolgt. Hierbei weisen die Ringsegmente 31 Anschrägungen 311 auf, so daß bei der Drehbewegung der Kragen 50 etwa 1 mm axial zum Druckring 26 verschoben wird, so daß bei eingerücktem Bajonettverschluß die Hülse 3 von den Federn 52 gegen den Gleitring 6 gedrückt wird und hierdurch ihre Führung erhält. Vorzugsweise sind hierbei eine Knagge 501 und ein Freiraum 32 etwas breiter ausgelegt als die anderen beiden, so daß die Hülse 3 nur in einer Drehstellung auf das Ringelement 5 aufbringbar ist, wobei die Ringsegmente 31 so ausgebildet sind, daß nach der Stecklage die Hülse 3 um 180° gedreht wird, wonach in dieser Drehlage die Hülse 3 über den gesamten Drehbereich von 100° des Stellhebels 21 in der Ventilkartusche 2 zur Einstellung des Mischungsverhältnisses axial gesichert ist. Damit die Hülse 3 zusätzlich relativ spielfrei radial auf dem Kragen 50 geführt wird, sind außerdem die Knaggen 501 mit Hilfe von Auskehlungen 503 an der Innenwandung des Kragens 50 federnd angeordnet, so daß sie federnd an die Innenwandung der Hülse 3 gedrückt werden, wobei zur glatten Anlage die Außenfläche der Knaggen 501 ballig ausgebildet ist. Um eine reibungsarme Drehverbindung zu ermöglichen, ist das Ringelement 5 aus gut gleitfähigem Kunststoff hergestellt. Durch die Anordnung des Gleitrings 6 an der Stirnkante 12 und dem Anlagebereich der Hülse 3 ist außerdem ein Eindringen von Schmutzpartikeln oder Flüssigkeiten an der Übergangsstelle vom Armaturenkörper 1 zur Hülse 3 weitgehend ausgeschlossen.
Die von dem Armaturenkörper 1 abgekehrt liegende Stirnseite der Hülse 3 ist mit einer halbkugelförmigen Wölbung 35 verschlossen, wobei in dem nach unten zeigenden Schlitz 33 der Handhebel 4 mit seinem Ansatz 41 an dem Winkelstück 40 befestigt ist, wie es insbesondere aus Figur 1 und 2 zu entnehmen ist. Der Schlitz 33 ist dabei so dimensioniert, daß der Ansatz 41 bei einer Drehbewegung des Handhebels 4 um die Mittelachse 20 die Hülse 3 auf dem Ringelement 5 und der Ventilkartusche 2 mitdreht. Die axiale Länge des Schlitzes 33 ist so bemessen, daß der Handhebel 4 zur Mengenregulierung um die Drehachse 200 im Rahmen der in der Ventilkartusche 2 vorgegebenen Anschläge bewegbar ist. Zur weiteren Abdeckung des Schlitzes 33 weist der Handhebel 4 einen Vorsprung 42 auf, so daß es auch weitgehend ausgeschlossen ist, daß Spritzwasser von unten in die Hülse 3 eindringen kann. Zur verschleißarmen Führung weist der Schlitz 33 außerdem eine Auskleidung 331 aus gut gleitfähigem Kunststoff auf. Die Auskleidung 331 ist hierbei als Einsatzstück ausgebildet, das in der Hülse 3 eingesprengt, verrastet und/oder verklebt ist. Die Auskleidung 331 steht dabei in den Schlitz 33 geringfügig vor, so daß die Oberfläche, insbesondere eine Chromschicht, der Hülse 3 von dem Winkelstück 40 nicht berührt wird.
Durch eine Bewegung des Handhebels 4 in Richtung eines Pfeils 43 (Figur 1) kann somit die Wasserausflußmenge feinfühlig eingestellt werden.

Mit einer Bewegung des Handhebels 4 in Richtung eines Pfeils 44 (Figur 1) kann das Mischungsverhältnis bzw. die Temperatur des abgegebenen Mischwassers bestimmt werden. Hierbei dreht sich die Hülse 3 entsprechend mit. Zur Anzeige des Mischungsverhältnisses bzw. der Mischwassertemperatur ist auf der Hülse 3 im Bereich des Armaturenkörpers 1 eine Skala 34 angeordnet, die mit einer auf dem Armaturenkörper 1 vorgesehenen Marke 13 zusammenwirkt.

Anstatt eines gesonderten Ringelements 5 kann auch das Ringelement einstückig an der Ventilkartusche ausgebildet sein, so daß dann die Hülse 3 unmittelbar bajonettartig mit der Ventilkartusche verbindbar ist.

## Patentansprüche

1. Mischventil, bestehend aus einem Armaturenkörper
(1) und einer die Ventilglieder aufnehmenden Ventilkartusche (2), mit einem an einem Stellhebel (21, 40) befestigbaren Handhebel (4) zur Betätigung eines in zwei Freiheitsgraden bewegbaren Ventilglieds zur Bestimmung des Mischungsverhältnisses und der Gesamtdurchflußmenge, wobei der mit dem bewegbaren Ventilglied verbundene, um zwei senkrecht zueinander in der Ventilkartusche
(2) angeordneten Drehachsen (20, 200) verschwenkbare Handhebel (4) seitlich durch einen Schlitz (33) aus dem Mantelbereich eines um die erste Drehachse (20) drehbar gehaltenen, als Hülse (3) ausgebildeten Hebelkopfgehäuses herausgeführt ist, und
- die Hülse (3) im Bereich des Armaturenkörpers (1) mit einer Stirnseite anliegt und geführt ist,
- zur axialen Sicherung der Hülse (3) in der Einbaulage als Rastmittel ein Ringelement (5) mit einer Anschlagbuchse (51) und einem Kragen (50) mit radial nach außen vorspringenden Knaggen (501) am Außenmantel der Ventilkartusche (2) geführt und abgestützt ist, während an der Hülse (3) radial nach innen vorstehende Ringsegmente (31) ausgebildet sind,
- die Hülse (3) axial auf den Kragen (50) in einer bestimmten Drehstellung aufsteckbar und nach einer Drehung in der Stecklage in eine Position, in der der Handhebel (4) durch den Schlitz (33) auf den Stellhebel (21, 40) befestigbar ist, über den gesamten, mit dem Handhebel (4) einstellbaren Schwenkbereich zur Mischwassereinstellung axial festliegend gehalten ist,
- der Kragen (50) mit der Hülse (3) in der Einbaulage von einer Feder oder mehreren Federn (52) als Spannelement in Richtung auf den Armaturenkörper (1) gedrückt ist.

2. Mischventil nach Anspruch 1, **dadurch gekennzeichnet, daß** Freiräume (32) zwischen den Ringsegmenten (31) ausgebildet sind.

3. Mischventil nach Anspruch 1 oder 2, **dadurch gekennzeichnet, daß** der Schlitz (33) so positioniert ist, daß die Hülse (3) nach dem Aufstecken um 180° zu drehen ist, um den Handhebel (4) mit der Ventilkartusche (2) zu verbinden.

4. Mischventil nach wenigstens einem der vorhergehenden Ansprüche, **dadurch gekennzeichnet, daß** die Federn (52) einerseits an einer Stirnseite der Anschlagbuchse (51) und andererseits an einer gegenüberliegenden Stirnseite des Kragens (50) befestigt sind.

5. Mischventil nach Anspruch 4, **dadurch gekennzeichnet, daß** die Anschlagbuchse (51) und/oder der Kragen (50) an der Innenwandung einen oder mehrere Drehsicherungsvorsprünge (53) hat, die in der Einbaulage die Spannschrauben (262) der Ventilkartusche (2) zum Teil umfassen und eine drehfeste Halterung des Kragens (50) zur Ventilkartusche (2) gewährleisten.

6. Mischventil nach Anspruch 4 oder 5, **dadurch gekennzeichnet, daß** das Ringelement (5) einstückig aus Kunststoff im Spritzgußverfahren hergestellt ist.

7. Mischventil nach wenigstens einem der vorhergehenden Ansprüche, **dadurch gekennzeichnet, daß** die Wandung des Kragens (50) im Bereich der Knaggen (501) an der Innenseite eine Auskehlung (503) aufweist, derart, daß die Knaggen (501) in der Stecklage federnd an der Innenwandung der Hülse (3) anliegen.

8. Mischventil nach wenigstens einem der vorhergehenden Ansprüche, **dadurch gekennzeichnet, daß** drei symmetrisch angeordnete Knaggen (501) vorgesehen sind, wobei die Knaggen (501) aus gut gleitfähigem Material hergestellt und an der äußeren Mantelfläche ballig zur reibungsarmen Anlage an der Hülse (3) ausgebildet sind, und die eine Knagge (502) breiter ausgebildet ist, so daß nur in einer bestimmten Drehstellung die Hülse (3) auf das Ringelement (5) aufschiebbar ist.

9. Mischventil nach wenigstens einem der vorhergehenden Ansprüche, **dadurch gekennzeichnet, daß** an dem aus der Ventilkartusche (2) herausgeführten Stellhebel (21) ein von der Hülse (3) umfaßbares Winkelstück (40) befestigbar ist, mit dem der Handhebel (4) mit einem Ansatz (41) verbindbar ist, wobei der Ansatz (41) so bemessen ist, daß die Hülse (3) über den Schlitz (33) bei einer Drehbewegung um die erste Drehachse (20) mitgeommen wird.

10. Mischventil nach wenigstens einem der vorhergehenden Ansprüche, **dadurch gekennzeichnet, daß** der Schlitz (33) in der Hülse (3) in seiner Länge so bemessen ist, daß eine erforderliche Schwenkbewegung um die senkrecht zur ersten Drehachse (20) angeordnete zweite Drehachse (200) zur Öffnung und Schließung der Ventilkartusche (2) ermöglicht ist, wobei im Bereich des Schlitzes (33) der Handhebel (4) einen oder mehrere Vorsprünge (42) zur Abdeckung des Schlitzes (33) hat.

11. Mischventil nach wenigstens einem der vorhergehenden Ansprüche, **dadurch gekennzeichnet, daß** die Hülse (3) auf der äußeren Mantelfläche eine Skala (34) zur Anzeige des eingestellten Mischungsverhältnisses hat.

12. Mischventil nach wenigstens einem der vorhergehenden Ansprüche, **dadurch gekennzeichnet, daß** zwischen der Stirnseite der Hülse (3) und der Stirnkante (12) des Armaturenkörpers (1) ein Gleitring (6) angeordnet ist.

13. Mischventil nach wenigstens einem der vorhergehenden Ansprüche, **dadurch gekennzeichnet, daß** die Hülse (3) an der von dem Armaturenkörper (1) abgekehrten Stirnseite mit einer halbkugelförmigen Wölbung (35) verschlossen ausgebildet ist.

14. Mischventil nach wenigstens einem der vorhergehenden Ansprüche, **dadurch gekennzeichnet, daß** die Hülse (3) einstückig aus Kunststoff hergestellt ist.

15. Mischventil nach wenigstens einem der Ansprüche 1 bis 13, **dadurch gekennzeichnet, daß** die Hülse (3) im Bereich des Schlitzes (33) eine Auskleidung (331) aus gut gleitfähigem Kunststoff aufweist, so daß eine verschleißarme Gleitführung des Handhebels (4) gewährleistet ist.

## Claims

1. Mixing valve, consisting of a fitting body (1) and a valve cartridge (2) housing the valve members, having a hand lever (4), attachable to a control lever (21, 40), for operation of a valve member movable in two degrees of freedom for determining the mixture ratio and the overall flow rate, wherein the hand lever (4) connected to the movable valve member and pivotable about two axes of rotation (20, 200) arranged perpendicular to one another in the valve cartridge (2) is lead laterally through a slot (33) out of the surface zone of a lever head housing, which housing is in the form of a sleeve (3) and is held so as to rotate about the first axis of rotation (20), and
- the sleeve (3) abuts the region of the fitting body (1) with an end face and is guided,
- to secure the sleeve (3) axially in the installed position, an annular element (5) having a stop bushing (51) and a collar (50) with radially outwardly protruding catches (501) is guided and supported, as locking means, against the outer casing of the valve cartridge (2), whilst radially inwardly protruding annular segments (31) are formed on the sleeve (3),
- the sleeve (3) can be pushed axially onto the collar (50) in a specific rotated position and, after a rotation in the mounted position into a position in which the hand lever (4) is fixable through the slot (33) on the control lever (21, 40), is held axially fixed over the entire pivoting range for mixed water setting adjustable with the hand lever (4),
- the collar (50) with the sleeve (3) in the installed position is pressed by a spring or a plurality of springs (52) as clamping element towards the fitting body (1).

2. Mixing valve according to claim 1, **characterised in that** spaces (32) are formed between the annular segments (31).

3. Mixing valve according to claim 1 or 2, **characterised in that** the slot (33) is positioned so that, after being mounted, the sleeve (3) can be rotated through 180° in order to connect the hand lever (4) with the valve cartridge (2).

4. Mixing valve according to at least one of the preceding claims, **characterised in that** the springs (52) are fixed on one side to an end face of the stop bushing (51) and on the other side to an opposing end face of the collar (50).

5. Mixing valve according to claim 4, **characterised in that** the stop bushing (51) and/or the collar (50) have/has on the inner wall one or more anti-rotation projections (53), which in the installed position engage partly around the clamping screws (262) of the valve cartridge (2) and ensure that the collar (50) its held non-rotatably with respect to the valve cartridge (2).

6. Mixing valve according to claim 4 or 5, **characterised in that** the annular element (5) is manufactured in one piece from plastics material by an injection moulding process.

7. Mixing valve according to at least one of the preceding claims, **characterised in that**, on its inside, the wall of the collar (50) has a concavity (503) in the region of the catches (501), such that the catches (501) rest resiliently against the inner wall of the sleeve (3) in the mounted position.

8. Mixing valve according to at least one of the preceding claims, **characterised in that** three symmetrically arranged catches (501) are provided, the catches (501) being manufactured from material having good sliding contact properties and on the outer lateral surface being of domed construction for low-friction contact with the sleeve (3), and the one catch (502) being of broader construction, so that the sleeve can be pushed onto the annular element (5) only in a specific rotated position.

9. Mixing valve according to at least one of the preceding claims, **characterised in that** an angled member (40) surrounded by the sleeve (3) and with which the hand lever (4) is connectible by means of an extension (41) is fixable to the control lever (21) lead out of the valve cartridge (2), the extension (41) being dimensioned so that on rotary movement about the first axis of rotation (20) the sleeve (3) co-rotates via the slot (33).

10. Mixing valve according to at least one of the preceding claims, **characterised in that** the length of the slot (33) in the sleeve (3) is dimensioned so that a required pivoting movement about the second axis of rotation (200) arranged perpendicular to the first axis of rotation (20) to open and close the valve cartridge (2) is rendered possible, wherein in the region of the slot (33) the hand lever (4) has one or more projections (42) to mask the slot (33).

11. Mixing valve according to at least one of the preceding claims, **characterised in that** the sleeve (3) has a scale (34) on its outer lateral surface to indicate the mixture ratio set

12. Mixing valve according to at least one of the preceding claims, **characterised in that** a sliding ring (6) is arranged between the end face of the sleeve (3) and the end edge (12) of the fitting body (1).

13. Mixing valve according to at least one of the preceding claims, **characterised in that** at its end face remote from the fitting body (1) the sleeve (3) is of closed construction, in the form a hemi-spherical curvature (35).

14. Mixing valve according to at least one of the preceding claims, **characterised in that** the sleeve (3) is manufacture in one piece from plastics material.

15. Mixing valve according to at least one of claims 1 to 13, **characterised in that**, in the region of the slot (33), the sleeve (3) has a lining (331) of plastics material having good sliding contact properties, to ensure sliding guidance of the hand lever (4) with a low rate of wear.

## Revendications

1. Robinet mélangeur composé d'un corps d'appareil (1) et d'une cartouche d'obturateur (2) qui renferme les organes obturateurs, et comprenant un levier à main (4) pouvant être fixé à un levier de commande (21, 40) et destiné à l'actionnement d'un organe obturateur qui peut être déplacé avec deux degrés de liberté pour définir le rapport de mélange et le débit d'écoulement total, dans lequel le levier à main (4), qui est relié à l'organe obturateur mobile, et qu'on peut faire pivoter autour de deux axes de rotation (20, 200) disposés perpendiculairement entre eux dans la cartouche d'obturateur (2), peut être écarté latéralement, à travers une fente (33), de la région de la paroi d'un chapeau de tête de levier constitué par une douille (3), montée mobile en rotation autour du premier axe de rotation (20), et
- la douille (3) est appuyée et guidée par un côté frontal dans la région du corps (1) de l'appareil,
- pour l'immobilisation axiale de la douille (3) dans la position de montage, il est prévu, comme moyen d'accrochage, un élément annulaire (5) muni d'un collier de butée (51) et d'un collet (50) muni lui-même de taquets (501) en saillie radialement vers l'extérieur, qui est guidé et appuyé sur la paroi extérieure de la cartouche d'obturateur (2), alors que, sur la douille (3) sont formés des segments d'anneau (31) en saillie radialement vers l'intérieur,
- la douille (3) peut être emboîtée axialement sur le collet (50) dans une position de rotation déterminée et, après une rotation exécutée dans la position emboîtée, elle est tenue immobile dans la direction axiale dans une position dans laquelle le levier à main (4) peut être fixé sur le levier de commande (21, 40) à travers la fente (33), sur toute la plage de pivotement qui peut être réglée au moyen du levier à main (4), pour le réglage du mélange d'eau, et
- le collet (50) est pressé en direction du corps d'appareil (1), avec la douille (3) dans la position de montage par un ressort ou plusieurs ressorts (52) constituant un élément de serrage.

2. Robinet mélangeur selon la revendication 1,
**caractérisé en ce que**
des espaces libres (32) sont formés entre les segments d'anneau (31).

3. Robinet mélangeur selon la revendication 1 ou 2,
**caractérisé en ce que**
la fente (33) est positionnée de manière que la douille (3) doive être tournée de 180 ° après son emboîtement pour relier le levier à main (4) à la cartouche d'obturateur (2).

4. Robinet mélangeur selon au moins une des revendications précédentes,
**caractérisé en ce que**
les ressorts (52) sont fixés, d'une part, à un côté frontal du collier de butée (51) et, d'autre part, à un côté frontal opposé du collet (50).

5. Robinet mélangeur selon la revendication 4,
**caractérisé en ce que**
le collier de butée (51) et/ou le collet (50) possèdent sur la paroi intérieure une ou plusieurs saillies de blocage en rotation (53) qui, dans la position de montage, entourent en partie les vis de serrage (262) de la cartouche d'obturateur (2) et assurent une retenue solidaire en rotation de la collerette (50) par rapport à la cartouche d'obturateur (2).

6. Robinet mélangeur selon la revendication 4 ou 5,
**caractérisé en ce que**
l'élément annulaire (5) est fabriqué en une seule pièce en matière plastique par le procédé de moulage par injection.

7. Robinet mélangeur selon au moins une des revendications précédentes,
**caractérisé en ce que**
la paroi du collet (50) présente une gorge (503) sur le côté intérieur, dans la région des taquets (501), de sorte que les taquets (501) sont en appui élastiquement contre la paroi intérieure de la douille (3) dans la position d'emboîtement.

8. Robinet mélangeur selon au moins une des revendications précédentes,
**caractérisé en ce qu'**
il est prévu trois taquets (501) disposés symétriquement, les taquets (501) étant fabriqués en une matière qui glisse facilement et étant formés sur la surface de paroi extérieure, avec une forme bombée pour s'appuyer avec un faible frottement contre la douille (3) et l'un des taquets (502) est de conformation plus large, de sorte que la douille (3) ne peut être emboîtée sur l'élément annulaire (5) que dans une certaine position de rotation.

9. Robinet mélangeur selon au moins une des revendications précédentes,
**caractérisé en ce qu'**
au levier de commande (21) qui émerge de la cartouche d'obturateur (2), peut être fixée une pièce coudée (40) qui peut être entourée par la douille (3), avec laquelle le levier à main (4) peut être relié à une patte (41), la patte (41) étant de dimension telle que la douille (3) soit entrainée au moyen de la fente (33) dans un mouvement de rotation autour du premier axe de rotation (20).

10. Robinet mélangeur selon au moins une des revendications précédentes,
**caractérisé en ce que**
la fente (33) formée dans la douille (3) est dimensionnée en longueur de manière à permettre un mouvement de pivotement nécessaire autour du deuxième axe de rotation (200) disposé perpendiculairement au premier axe de rotation (20), pour l'ouverture et la fermeture de la cartouche d'obturateur (2), alors que, dans la région de la fente (33), le levier à main (4) possède une ou plusieurs saillies (42) destinées à recouvrir la fente (33).

11. Robinet mélangeur selon au moins une des revendications précédentes,
**caractérisé en ce que**
la douille (3) présente une échelle graduée (34) sur la surface de paroi extérieure pour indiquer le rapport de mélange réglé.

12. Robinet mélangeur selon au moins une des revendications précédentes,
**caractérisé en ce qu'**
une bague de glissement (6) est disposée entre le côté frontal de la douille (3) et l'arête frontale (12) du corps de robinet (1).

13. Robinet mélangeur selon au moins une des revendications précédentes,
**caractérisé en ce que**
la douille (3) est fermée avec un bombé hémisphérique (35) sur le côté frontal qui est éloigné du corps d'appareil (1).

14. Robinet mélangeur selon au moins une des revendications précédentes,
**caractérisé en ce que**
la douille (3) est fabriquée en une seule pièce en matière plastique.

15. Robinet mélangeur selon au moins une des revendications 1 à 13,
**caractérisé en ce que**
la douille (3) présente, dans la région de la fente (33), un revêtement (331) fait d'une matière plastique qui glisse facilement, ce qui garantit un guidage glissant à faible usure du levier à main (4).
